# EUROPEAN PATENT APPLICATION

(11) **EP 3 919 889 A2**
(43) Date of publication of application: **08.12.2021**
(21) Application number: 21164752.4
(22) Date of filing: 24.03.2021
(51) Int. Cl.: G01N 17/04

(54) **CORROSION MONITORING SYSTEM**

(30) Priority: 01.06.2020 EP 20177638
(71) Applicant: Captain Corrosion OÜ, 50603 Tartu (EE)
(72) Inventor: MERISALU, Maido, 50603 Tartu (EE); PIIRSOO, Helle-Mai, 50603 Tartu (EE)
(74) Representative: Sarap, Margus

(57) **Abstract**

A corrosion monitoring system for monitoring the rate of corrosion with a dedicated sensor and an optional measurement device. In such a system, the sensor is covered at least partially with a layer of material that corrodes in the application environment at a rate, which is comparable with the monitored material. The penetration of the layer of material on the sensor causes a change of the properties of the sensor element, which can be detected through an in-built mechanism or an external measurement device.

## Description

### Technical Field

The present invention is related to corrosion monitoring systems and to a method of preparing such systems for metallic and non-metallic materials, in particular for use in application environments that are inaccessible or difficult to access.

### Background Art

Monitoring the condition of materials and their rate of corrosion over time in corrosive environments is important in many industries, in particular in a) oil and gas industry, b) water industry, c) shipbuilding and marine industries, d) energy industry and e) aerospace industries.

It is desirable for such corrosion monitoring systems to a) be easily installable onto existing structures in each application, b) be user friendly and understandable for anyone, c) serve their purpose over a long period of time, d) have low power consumption, e) be compact and f) be compatible with a computer that saves and processes the measured data.

In the state of the art the nearest technical solution to present method is proposed in EP0150552A1, 07.08.1985, SSL Limited. The rate of corrosion is determined by measuring the electrical resistance of a probe sample that is made of the same material as the pipe. Probe is mounted to the pipe so the sample is exposed to the exact same environment as the pipe wall.

Another technical solution is described in EP3246693A1, 22.11.2017, General Electric Company. The rate of corrosion is determined by measuring the electrical resistance of metal probes with different cross-section.

Another technical solution is described in US6,911,828B1, 28.06.2005, Southwest Research Institute. The rate of corrosion is determined by measuring the electrochemical impedance of a material.

Another technical solution is described in US6,690,182B2, 10.02.2004, Virginia Technologies. The rate of corrosion is determined by measuring the conductivity and linear polarization resistance of a material and chloride concentration.

Another technical solution is described in US2011/0210014A1, 01.09.2011, Thomas J. Garosshen. The rate of corrosion is determined by measuring the wetness, temperature, electrolyte strength and conductivity.

Another technical solution is described in US9,109,989B2, 18.08.2015, International Business Machines Corporation. The rate of corrosion is determined by measuring the temperature, humidity, air flow speed and gaseous contamination concentrations.

Another technical solution is described in WO2011/035152A1, 24.03.2011, CONO-COPHILLIPS COMPANY. The rate of corrosion is determined by measuring the time difference between ultrasonic signals that have reflected from the front and back surfaces of a pipe wall.

### Summary of invention

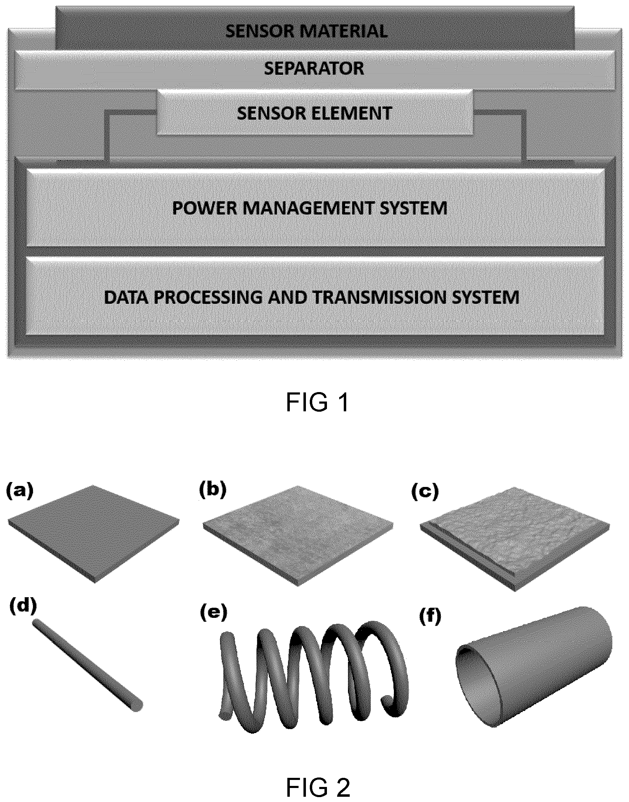

An embodiment of the invention is a corrosion monitoring system that consists of a sensor and a measurement device. The sensor is installed onto a structure, e.g. pipe, roof, satellite, ship, fuel tank, propulsion system, reactor etc. to monitor its corrosion in the application environment. The measurement device is used to gather the data from the sensor. The sensor itself consists of a) a sensor material, b) sensor casing, c) sensor element, d) separator, e) power management system and f) data processing and transmission system (see Fig. 1). The layer of sensor material will be in contact with the application environment and corrode over time. Once corrosion has progressed through the layer of sensor material, the sensor element will come into contact with the environment. As a result, the sensor element provides the electronics or the observer with a signal that can be measured with the measurement device or observed visually. By varying the thickness and composition of the sensor material and knowing its rate of corrosion in comparison with the monitored material of the structure, it is possible to estimate the progression of corrosion of the structure. For instance, if the sensor material is 1 mm steel sheet and the structure is a steel pipe with a wall thickness of 10 mm, then the corrosion of the 1 mm sheet exposes the sensor element to the corrosive environment which will trigger a signal. That signal represents 10% corrosion of the wall of the steel pipe.

The purpose of the sensor material is to corrode faster than the monitored structure and ultimately expose the sensor element to trigger a signal. Therefore, the sensor material must have a well-defined thickness, composition and rate of corrosion so that its corrosion can be comparable with the material of the structure, where corrosion is being monitored. For that purpose, the corrosion mechanism of the sensor material must also be similar to the material of the structure, e.g. uniform corrosion, galvanic corrosion, pitting corrosion etc. In most cases the sensor material can be the same as the material of the structure which means that in the case of monitoring the corrosion of a steel pipe, the sensor material is also the same steel alloy as the pipe material. However, the sensor material may also be different from the material of the structure if the rate of corrosion for both materials is known, e.g. sensor material is made out of pure iron while structure material is carbon steel. The thickness of the sensor material depends on its rate of corrosion in comparison with the material of the structure with the goal to fail before the monitored material of the structure. The thickness of the sensor material may therefore range from 1 nm, essentially a thin ceramic, polymer, or metallic film applied by nanotechnologies, that include physical sputtering or chemical deposition techniques to 100% of the thickness of the material of the structure (e.g. same thickness as the wall of a steel pipe, for example up to .....). Ultra-thin sensor materials in the form of films may be required in situations, where the goal is to a) gain feedback about the change of the properties of a materials surface (e.g. roughness, reflectance, overall vulnerability to corrosion) or b) measure the rate of corrosion in environments, where corrosion takes place over a longer period of time (e.g. in space over few years). A thicker layer of sensor material on the other hand may be preferred in situations, where a certain percentage corrosion of a structure material must be measured in order to know when it is time for maintenance - e.g. 50% interior corrosion of a pipe wall in oil & gas industry. In most cases the sensor material is in the form of a) deposited layer, b) sheet or plate, c) wire, or a d) more sophisticated structure (see Fig. 2).

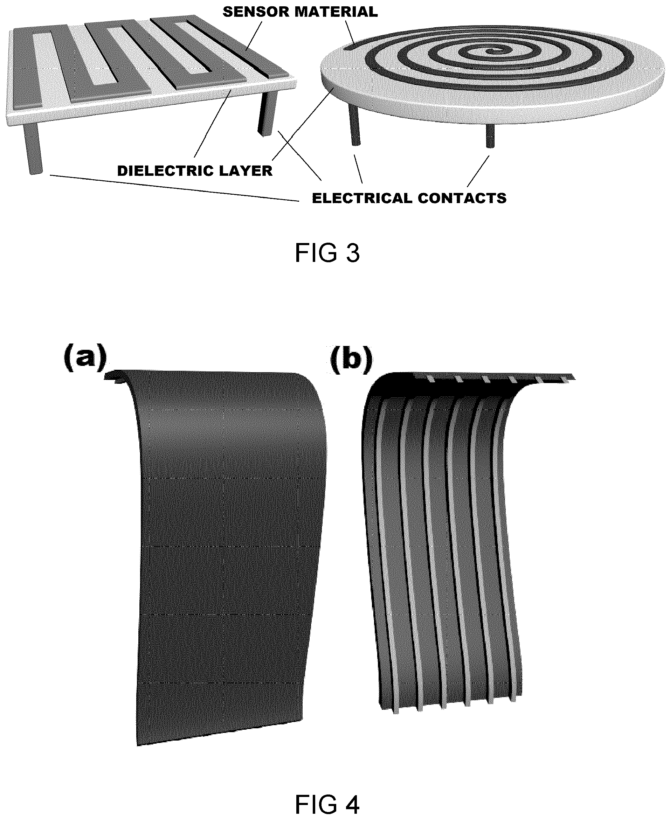

The gradual corrosion of the sensor material may also be measured by measuring the change of its electrical properties (e.g. electrical resistance or conductivity). For that purpose, the sensor material needs to have an appropriate thickness, diameter or 2D/3D structure so that it has an electrical resistance that is suitable for measurement with compact electronic systems (ohmmeters). For instance, the sensor material may be a 2 dimensional structure that has been cut out of a larger sheet in order to increase its electrical resistance for measuring its gradual corrosion in the corrosive environment (see Fig. 3). This is needed in the case of metals that have a very high conductivity, which cannot be measured with compact electronic systems.

The sensor material may have a 3 dimensional shape, which includes protrusions, cavities, well-defined roughness and surface morphology to simulate corrosion that takes place in certain places of the structure material. For instance, protrusions may corrode faster due to the additional effect of erosion component in flowing systems. Corrosion may also be promoted in cavities due to pitting corrosion mechanisms (galvanic coupling with surrounding area as well as lowering of pH in the cavity). Another example use of a uniquely 3D shaped sensor material can be in a sensor that monitors the corrosion of materials in reactors - e.g. the degradation of divertors in fusion reactors. For that purpose, the sensor material is shaped similarly to the other divertors used in the system (see Fig. 4). Once the sensor material suffers sufficient damage, the sensor element triggers a signal, which indicates that divertors have suffered a certain level of damage and need to be replaced in order to ensure proper, stable, sustainable and safe work of the fusion reactor.

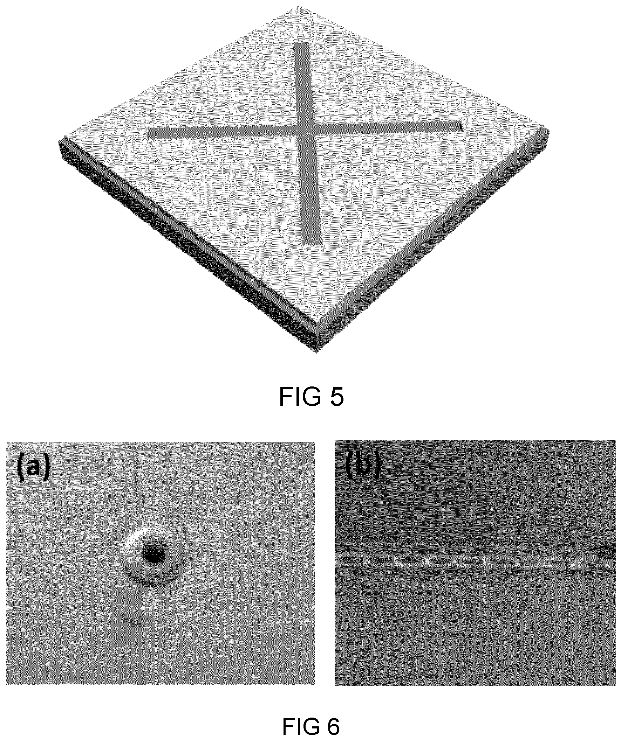

The sensor material may be made out of metals, ceramics, polymers, liquids (e.g. lubricant), single atomic layer materials (e.g. graphene, boronitride) or composite materials and it may consist of multiple layers. For instance, the sensor material can also be a metal plate that has a coating of another material (e.g. paint coating). The coating may also be artificially damaged to monitor the corrosion in potentially occurring defects in the monitored material of the structure (see Fig. 5).

The sensor material may also consist of multiple materials, having their interface exposed to the corrosive environment. For instance, the sensor material could be an aluminium plate with a steel bolt in it - the galvanic corrosion would occur most rapidly at the bolt/plate interface and eventually trigger a signal when the sensor element comes into contact with the environment (see Fig. 6). Another example would be a plate that has been welded together - the welded part usually corrodes fastest (see Fig. 6).

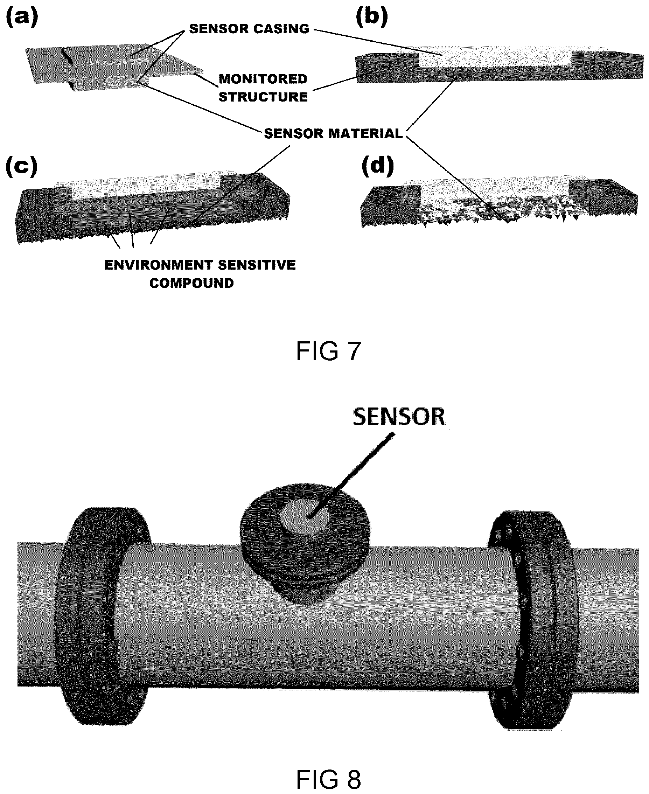

The sensor casing is designed out of materials (polymer, metallic, ceramic) that are as durable or more durable than the sensor material in the corrosive application environment. If there is a risk of unwanted galvanic coupling between the casing material and the sensor material, that could either promote or hinder the corrosion of the sensor material, then they need to be insulated from one another. Additional insulation is also required if the goal is to measure the change of electrical properties of the sensor material. Furthermore, the sensor may also be designed in a manner where the casing itself serves the purpose of the sensor material (see Fig. 7). The sensor casing may also be made transparent in a desired spectral range so that the internal condition of the sensor can be monitored visually or with other devices that allow to do it in the non-visible spectral region (e.g. ultraviolet, X-ray, infrared) (see Fig. 7).

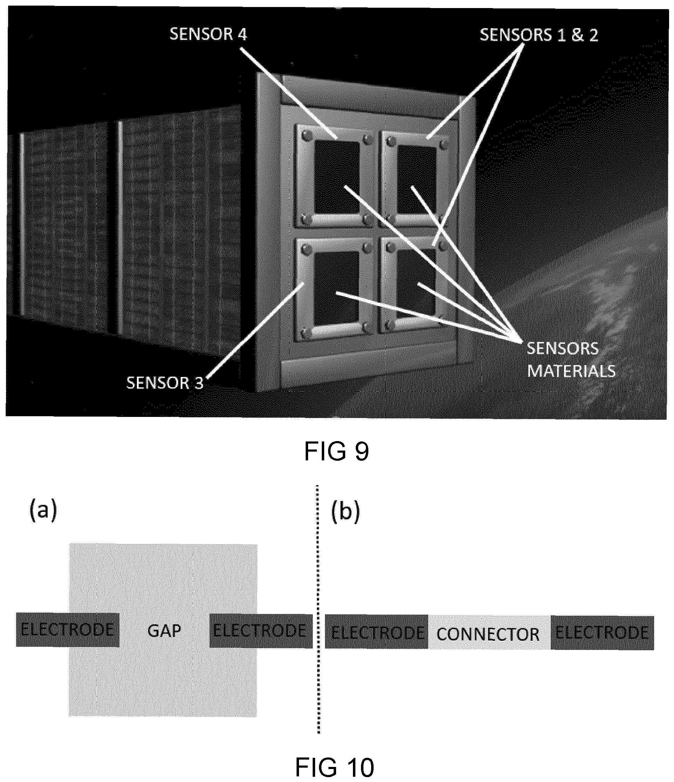

The sensor casing is designed to be compatible with the application structure and is partially or completely exposed to the corrosive environment. For instance, in water, oil and gas industry, the sensor can be designed so that it can be mounted onto standard valve ports, having the sensor material exposed to the interior of the pipe (see Fig. 8). In the case of satellites, the sensor material is exposed to space while the measurement electronics are inside the satellite (see Fig. 9).

The embodiment of a sensor element is a structure that has well-defined properties (electrical conductivity, electrical resistance, mass, vibration frequency, colour, reflectance, absorption, pressure, mechanical properties, state of matter, pH, temperature etc.) which will change upon coming into contact with the application environment. Upon contact with the application environment, it is desired for the change of the properties to happen as fast as possible in order to make the sensor more accurate.

Sensor elements that are based on the change of electrical properties, consist of at least two connecting electrodes that are separated by a) gap, or a b) connector (see Fig. 10).

The gap in electrical conductivity based sensor elements may be in vacuum or filled with liquid, gas or plasma at a desired pressure. Once the sensor material has corroded, compounds from the application environment enter the gap and significantly alter the electrical properties of the region between the electrodes. For instance, if the gap is originally filled with air, then due to the corrosion of the sensor material by water the gap is filled with water and this increases the overall electrical conductivity between the electrodes. In contrast, if the gap is filled with a conductive liquid, then the corrosion of sensor material causes the liquid to leak and therefore increase the electrical resistance of the sensor element. Furthermore, the electrical resistance of the sensor element can also change if the pressure in the gap changes or if the substance in the gap changes its state of matter due to phase transition upon coming into contact with the application environment when the sensor material is penetrated.

The connector in electrical property based sensor elements may be a) a sacrificial material b) an environment-sensitive material, c) a porous structure, d) an ion conductive material or e) a more sophisticated structure consisting of one or more materials.

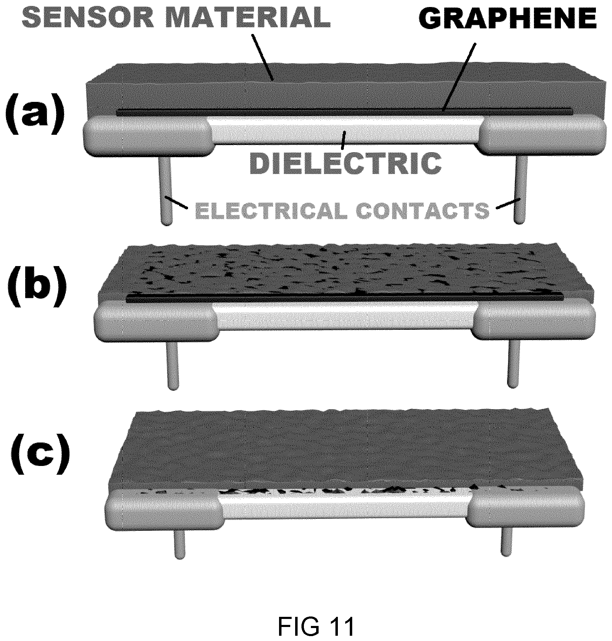

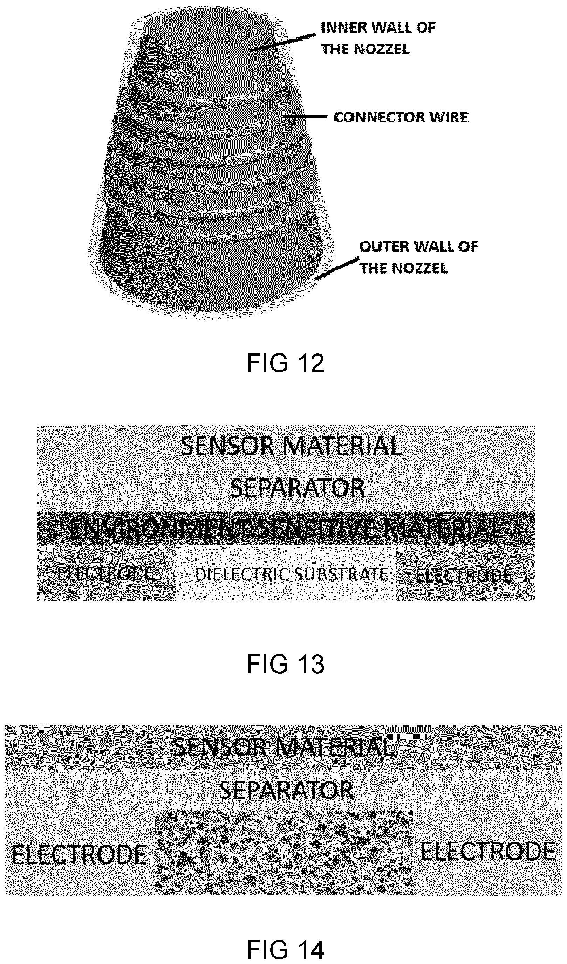

A connector made out of a sacrificial material may be in the form of a sheet, layer, thin film, rod, wire or block that has a well-defined electrical resistance and conductivity. Upon corrosion of the sensor material, compounds from the application environment interact with the sacrificial material (can be metal, ceramic, polymer, composite) via chemical reactions, dissolution, erosion or any combination of them. In any case, the sacrificial material changes form or is either partially or completely removed, which alters the electrical properties of the region between the electrodes. An example of a connector made out of a sacrificial material would be a layer of graphene in a sensor used for monitoring corrosion in space at low Earth orbit (see Fig. 11). Once the sensor material has corroded, atomic oxygen comes into contact with graphene and chemically reacts with it, forming CO and/or CO₂. As a result, graphene is essentially destroyed and the electrical resistance between electrodes rapidly dramatically increases. Another example is the use of a thin wire of iron as a sacrificial connector material in sensors that monitor the progression of steel in oil pipes. Once the sensor material is corroded, the thin film of iron comes into contact with oil and is either corroded or physically ruptured, causing an increase of electrical resistance in the region between electrodes. However, the sacrificial connector material may also be a dielectric, which is removed by the application environment upon the corrosion of sensor material. As a result, the electrical resistance in the region between electrodes would decrease. Furthermore, if salt was used as the sacrificial material, then in the solid form it would be dielectric but upon contact with water it would start to dissolve and form a highly conductive region between the electrodes. An example of using a wire as connector is a sensor that monitors the corrosion of propulsion systems (especially the corrosion of nozzle). For that purpose, the critical part of the propulsion system component (e.g. inner wall of the nozzle) acts as the casing material as well as the sensor material. The connector wire on the other hand is applied on the side of the propulsion side component that is not exposed to the harsh corrosive conditions (see Fig. 12). Once the propulsion system component is sufficiently damaged by corrosion, the connector wire is also damaged, which alters its electrical properties (e.g. increased resistance or even loss of contact).

A connector made out of an environment-sensitive material interacts with compounds from the application environment by forming physical or chemical bonds (see Fig. 13). As a result, the connector is not destroyed but its electrical properties will have changed. An example would be graphene and other nanomaterials that are sensitive to moisture. An embodiment of such a sensor would find use in monitoring the corrosion of water pipes or ventilation systems. Once the sensor material is corroded, the application environment (water in pipes or air in ventilation system) comes into contact with the moisture-sensitive connector and changes its electrical properties. Since many moisture-sensitive materials are reusable, a sensor based on them can be renewed for reinstallation by drying and replacing the sensor material.

A connector made out of a porous material has a large surface area and therefore the physical and / or chemical bonds made with compounds of the application environment have a greater effect on the electrical properties of the connector. Furthermore, the structure may act like as a "sponge" - a soft substance that is full of small holes and can absorb a lot of liquid - and draw in even more of certain compounds from the application environment, which increases the change of electrical properties even further. A connector made out of a porous material separating two conductive plates can also be made to swell or shrink upon coming into contact with the application environment, which would alter the capacitance of the connector (see Fig. 14).

A connector made out of an ion conductive material can change its electrical properties if it comes into contact with certain compounds in the application environment. That is caused by the migration of ions between the ion conductive material and the application environment. An embodiment of such a connector would be a polypyrrole film that was synthesized without access to chloride ions and dried (e.g. in sulphuric acid). Upon contact with tap water or even air that contains moisture and chlorine to a degree, the chloride ions would penetrate into polypyrrole and change its electrical properties.

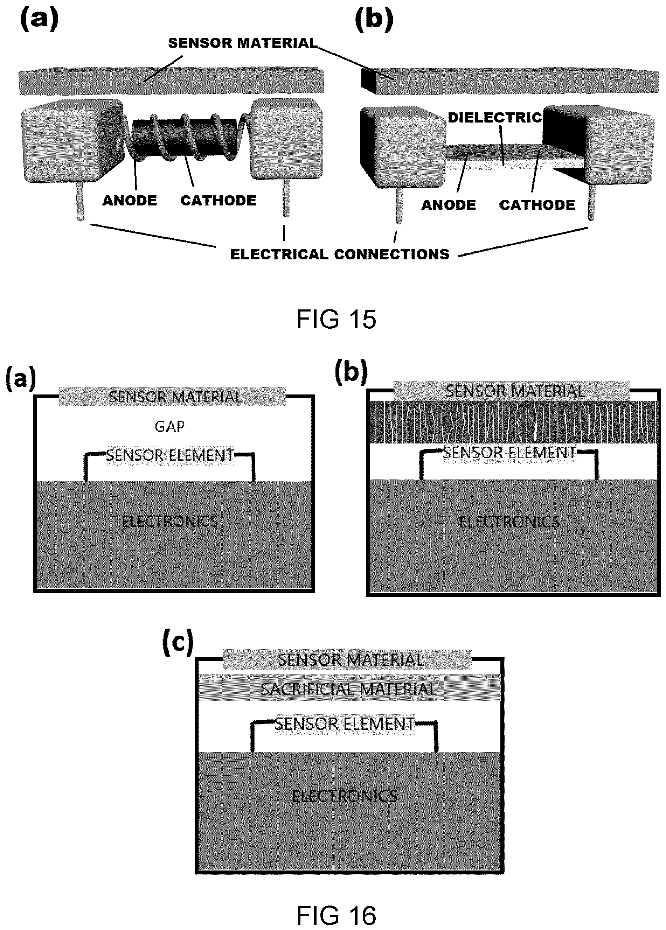

A connector can also be made out of a more sophisticated structure in order to increase its speed of interaction as well as change of electrical properties upon contact with the application environment. For instance, by making a connector out of electrochemically different materials, causes the more active component of the structure to corrode faster when in contact with moist saline environments. An embodiment of such a structure would could be as simple as a thin copper wire wrapped around graphite rod, where copper would rapidly corrode and ultimately lead to loss of contact between the electrodes (see Fig. 15). An alternative solution for such a connector could be dielectric plate coated with stripes of metals of different electrochemical activity - upon contact with moist saline air, the more active metal will corrode and lead to loss of contact between electrodes (see Fig. 16).

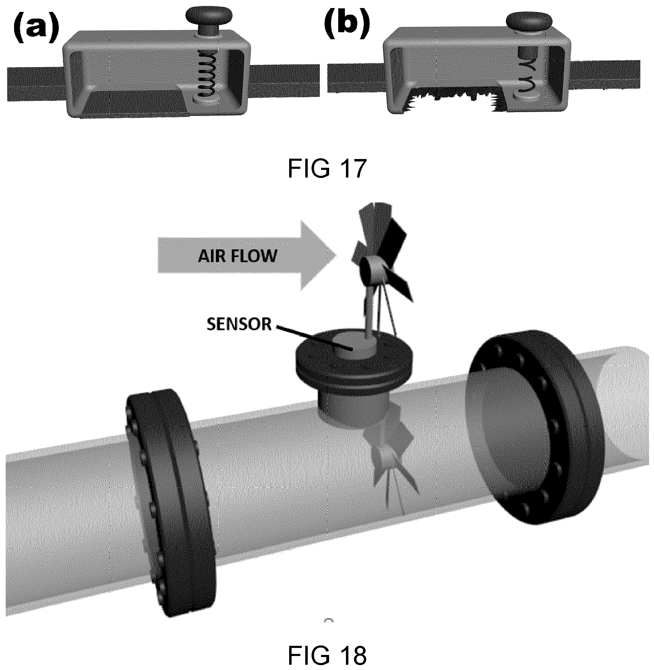

The separator in a corrosion monitoring system provides electrical insulation between the sensor material and the sensor element but doesn't significantly hinder the movement of corrosive species. For that purpose, the separator can be a gap (in vacuum or filled with gas), a highly porous material (e.g. woven glass, paper, woven and nonwoven fabrics) or a thin layer of sacrificial material that is quickly removed as soon as it comes into contact with the application environment when the sensor material has corroded (see Fig. 17).

Sensor elements that are based on the change of mechanical properties, include a mechanical spring and/or cogwheels connected to it. Upon contact with the application environment due to the penetration of the sensor material, the mechanical spring and/or its support mechanisms (e.g. cogwheels) are corroded, which causes a change in their mechanical properties. The change of mechanical properties (including the total failure of the internal mechanism) due to corrosion can be detected with an external system that is connected to it. This can be done for instance with a button and/or a mechanism for winding up the spring and displaying its release.

In an embodiment of the corrosion monitoring system, the power management system may include external power supply through wires, wireless power transfer system via induction from an external device, power generation with solar cells, fuel cells, dynamos (using flow of gas or liquid - e.g. air in ventilation system and water or oil in pipes), thermoelectric generators, energy storage in batteries (including rechargeable ones that are regularly recharged with previously named power supply systems), adapters and supportive electronics for power management and communication with external control systems.

In applications, where the corrosion monitoring system has to be self-sustainable (e.g. no access to power via cables), the required amount of power can be created with the help of solar cells and converted into a suitable form with appropriate adapters and stored in batteries. An example would be a system for monitoring corrosion in space on a satellite, where the system is powered by solar panels, converted into suitable voltage, excess energy stored in batteries and distributed by the board computer. Another example is the monitoring of corrosion of materials in outdoor environments (e.g. roofs, bridges), where it is not practical to use long cables. There the energy is collected with solar panels during the day and excess amount is stored in batteries. During night, the batteries supply the corrosion monitoring system.

In applications, where the corrosion monitoring system has to be self-sustainable it may be possible to utilize dynamos to harness the kinetic energy of the internal or external environment. For instance, the flow of water or air inside pipes, where corrosion is monitored, can be used to rotate rotor blades that are connected to a dynamo that powers the monitoring system (see Fig. 18). Another example of utilizing the kinetic energy of the environment is the monitoring of corrosion inside a pipe (e.g. oil or water pipe) while the rotor blade is placed outside of the pipe to harness the energy of wind (on land based pipes) or water (underwater applications). The kinetic energy can also be harnessed on mobile vehicles (cars, ships, planes), where the movement of the vehicle causes the external rotor blades to move and power the corrosion monitoring system. For instance, in the case of large ships, the corrosion monitoring system of fuel tanks is powered by a dynamo and rotor blades right outside the hull of the ship inside water.

Fuel cells allow to draw some or all of the required fuel from the application environment as well as the surrounding environment to convert it into electrical energy that can power the corrosion monitoring system. For instance, oxygen can be extracted from the surrounding air while the other component from a storage or in some cases from the application environment (e.g. gas inside the same pipe, where corrosion is monitored).

In applications, where a sufficient temperature gradient is present, it is possible to power the corrosion monitoring system with thermoelectric generators. A potential application could be a water pipe that is often colder than the surrounding air. The temperature difference between water (in pipe) and the surrounding air can be converted into electrical energy with a thermoelectric generator to power a corrosion monitoring system that monitors the progression of corrosion inside the water pipe.

In applications, where external power can be provided via cable, it is possible to use a larger variety of corrosion monitoring systems and also combine them with other sensors (e.g. humidity and CO₂ sensors inside ventilation systems) and central data processing systems.

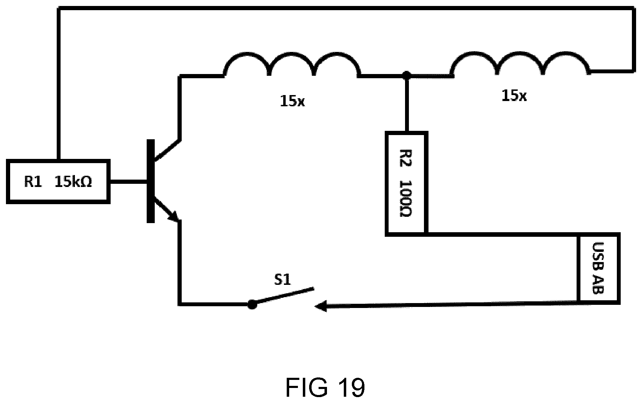

Corrosion monitoring systems can be designed to have a very low power consumption and only operate during the period while they are supplied with power. In these cases, it is possible to use wireless power transfer (e.g. via induction from an external power supply) to briefly power up the corrosion monitoring system and receive a signal about the progression of corrosion. An embodiment of such a corrosion monitoring system consists of a corrosion monitoring sensor that is equipped with a power receiver (e.g. a coil in the case of induction powering) and an external device that is capable of transferring power to the sensor via induction. The external device itself can be powered for instance from a smartphone, a smartphone power bank or an alternative power supply (see Fig. 19).

The information about the progression of corrosion that is provided by the sensor element (possibly through an additional signal transmission system) can be in the form of a) an electromagnetic signal (voltage or current) via a conductive cable or optical fibers, b) electromagnetic radiation c) sound, or d) power transfer via induction.

An embodiment of a corrosion monitoring system that transmits information about the progression of corrosion from sensor to a monitoring device (central computer or measurement device) via a cable or optical fibers can transfer raw or processed information. An example of raw information transfer would be a system, where an external system measures the electrical properties of the sensor element. Another example of raw data transfer is the irradiation of the sensor element through primary optical fibers and collecting the radiation that was reflected / emitted from the sensor element with secondary optical fibers. An example of processed data transfer is the use of an internal electronic device that measures the electrical properties of a sensor element and sends the measured value to an external control system through a conductive cable or optical fibers.

An embodiment of a corrosion monitoring system that transmits information about the progression of corrosion via electromagnetic radiation can be based on an internal or external source of radiation as well as an appropriate receiver that can detect the signal (e.g. eyes or camera for visible light or antennae for radio waves). An example of using an internal source of radiation can be a diode or antenna that emits electromagnetic radiation in a given energy range (most practical are ultraviolet light, visible light, infrared radiation, microwaves, radio waves, less practical are gamma radiation and x-ray radiation). For instance, an embodiment of such a corrosion monitoring system can consist of a) a sensor partially inside a pipe with an appropriate sensor material where the sensor that is equipped with a diode, a sacrificial wire as a connector in the sensor element, an induction-based power receiver and b) a portable unit that provides power via induction to the sensor. If the sensor material has not corroded, then the connector is intact and completes the electric circuit, which allows the diode to light up while it is powered with the external portable unit via induction. In contrast, if the sensor material has corroded and the connector has been destroyed, then the electric circuit is broken and thus the diode will not light up while the sensor is being powered with the external portable system via induction. If the diode emits visible light, then the feedback about corrosion can be received with bare eyes or conventional cameras. An example of using external source of radiation is a corrosion monitoring system, where the back part of the sensor is transparent for electromagnetic radiation in the given spectral range (e.g. glass is transparent for visible light). Once the sensor material has corroded, the change of its colour or the change of the sensor elements colour would be observable from the back side with an unaided eye by simply illuminating it with light.

An embodiment of a corrosion monitoring system that uses sound to transmit data about the progression of corrosion can utilize speaker and a conductive connector in the sensor element, which completes the electric circuit. If the sensor material is not corroded and the sensor receives power, then the speaker makes noise that can be heard or recorded with an external device. In contrast, if the sensor material has corroded and the connector has been destroyed, then the electric circuit is broken and no noise will be created when the sensor is powered.

An embodiment of a corrosion monitoring system that uses wireless data transfer via induction consists of a) a sensor that is powered (e.g. cable, solar cells, dynamo etc.) and has an induction-based power emission system and b) a portable measurement device that is equipped with an induction-based power receiver and a feedback system (e.g. diode) that indicates when the system receives power. In such a system the sensor would have a conductive connector in the sensor element that completes the electric circuit. As long as the sensor material is not corroded and the connector is intact, the sensor is capable of transferring power to the external portable measurement device.

### Brief description of drawings

The corrosion monitoring system will be described in detail below with reference to the drawings where:
Figure 1 shows an overall schematic of a corrosion monitoring sensor, which consists of a sensor material, casing, separator, sensor element and subsystems for power management, data processing and data transmission.
Figure 2. shows different types of sensor materials, which include plates and sheets (a), plates with topological features such as protrusions or cavities (b), multi-layered structures and coated substrates (c), rods and wires (d), springs (e) and tubes (f).
Figure 3. shows an a 2-dimensional sensor material acting as the sensor element. The corrosion of the sensor material is monitored by measuring the change of its electrical resistance. The top part of the 2-dimensional sensor material is exposed to the application environment while the electrical contacts are connected to the internal electronics in the sensor or onto an external ohmmeter.
Figure 4. shows a fusion reactor divertor target, where the layer of tungsten on the front (a) serves as the sensor material. The sensor elements behind the layer of tungsten (b) notify the user if a critical layer of tungsten has been damaged by the high energy plasma in the fusion reactor.
Figure 5. shows a sensor material that has been deliberatelly mechanically damaged to promote the corrosion of underlying material in the application environment.
Figure 6. shows sensor materials that include a connecting rivet, screw or bolt (a) or welded regions (b).
Figure 7. shows corrosion sensors mounted on a structure with different types of casings that can be made out of the same material as the structure (a) or transparent in a desired spectral range (b, c, d). The penetration of sensor material due to corrosion can be observed through the transparent casing, having an optional environmental sensitive compound between the transparent casing and the sensor material (c, d).
Figure 8. shows a corrosion sensor mounted on a standard valve port, having the sensor material exposed to the environment inside the pipe.
Figure 9. Illustration of corrosion sensors on a conventional 3 unit cube-satellite, having the sensor material exposed to space and the sensor element inside the satellite.
Figure 10. shows schematics of sensor elements with a gap (a) and with a connector (b).
Figure 11. shows a corrosion sensor for monitoring corrosion at low Earth orbit, where graphene serves as a sacrificial layer under the sensor material (a). Once the sensor material has been corroded, graphene becomes exposed to atomic oxygen (b) and is quickly oxidized (c), causing a drastic increase in electrical resistance between the electrical contacts.
Figure 12. shows of a propulsion system nozzle, which has an integrated sensor element for monitoring corrosion. Once the inner wall of the nozzle is breached, the connector wire in the sensor element is damaged or oxidized, causing a drastic increase of electrical resistance.
Figure 13. shows a schematic of a sensor element using an environment sensitive material as the connector.
Figure 14. shows a schematic of a sensor element using a porous material as the connector.
Figure 15. shows a corrosion sensor, having a connector made out of electrochemically dissimilar materials in order to induce galvanic corrosion upon contact with moist saline environment. Image on the left (a) shows an example of using copper wire wrapped around a graphite rod, which causes copper to corrode. Image on the right (b) shows two conductive materials (e.g. Cu and Pt) on a dielectric support being contact in the middle, where galvanic corrosion of anode (e.g. Cu) will occur and break the electrical circuit.
Figure 16. shows a schematic of corrosion sensors having a gap (a), porous material (b) or sacrificial material (c) as a separator.
Figure 17. shows a corrosion sensor, which uses a spring as a sensor element. If the sensor material has been breached due to corrosion, then the spring also corrodes and the button no longer works.
Figure 18. shows a corrosion sensor, which is powered with a dynamo by utilizing the flow or internal or external medium (air, water, gas, oil etc.) to move the rotor blades and generate electricity.
Figure 19. shows a schematic of a power management system used in corrosion monitoring systems. If used in an external measurement device, then it can wirelessly transfer power to the corrosion sensor, which then provides information about the condition of the sensor material (e.g. via a LED diode lighting up on the corrosion sensor).

### Description of embodiments

A corrosion monitoring system according to present invention for pipes and containers in oil, gas, water, chemical and ventilation industry consists of a sensor, that is completely or partially immersed into the corrosive application environment (oil, gas, water) and a measurement device. In such a system, the sensor material and/or the sensor casing material can be made from a similar material as the monitored structure (e.g. pipe or container), which is ideally penetrated due to corrosion faster than the monitored wall of the pipe or container and exposes the sensor element to the application environment. The sensor element in such a system is designed to change its properties as fast as possible upon coming into contact with the corrosive application environment. For instance, the sensor element may include a connector between electrodes, which is destroyed by the application environment and disrupts the electrical circuit. The sensor element may also include a gap between electrodes, which is filled by the application environment and completes the electrical circuit. The change of electrical properties of the sensor element can be detected or measured with an external ohmmeter, a central processing unit, a LED diode / light bulb or a speaker. The latter ones either stop or start working, depending on the completion or disruption of the electrical circuit in the sensor element. The power for the sensor in such a system is provided by an internal or external power source via cable or induction (power grid, battery, dynamo, solar panel, fuel cell etc.). Such a system can be used to monitor the condition of pipes and containers used in oil, gas, ventilation, water and chemical industries to alert the user when it is time for maintenance before the pipe or container starts to leak.

The sensor material is in the form of a flat or arbitrarily shaped plate or sheet, thin films applied via physical sputtering and chemical deposition techniques, a coating such as a paint, wire, tube or a sophisticated assembly or structure that mimics the monitored structure, where the sensor material can be a) a plate with welding or bolts in it, or b) a 2 dimensional or 3 dimensional structure with an electrical resistance that is suitable for measurements with compact less-sensitive ohmmeters, or c) a 3 dimensional shape with cavities, protrusions and appropriate roughness in order to mimic the monitored structure material, or d) a multi layered structure such as a metal with a paint coating, where the lower practical thickness limit for the sensor material can be as low as 1 nm, especially in the case of thin films, and the practical upper thickness limit for the sensor material in most applications is 5 m.

The sensor material is a metal, polymer, ceramic, liquid such as a viscous lubricant, two-dimensional material or a composite containing the previously afore-mentioned, where the most commonly used metals as sensor material include iron, aluminium, copper, tungsten, zinc, magnesium, titanium, nickel, silver, gold, platinum and their alloys, and the most commonly used polymers as sensor material include organic polymers such as polyethylene, polypropylene, polyvinyl chloride, plystyrene, nylon, Teflon@ and thermoplastic polyurethanes as well as inorganic polymers such as polysiloxanes and polyphosphazenes, and the most commonly used ceramics as sensor material include crystalline and non-crystalline, glass like materials, that can be oxides, nitrides or carbides with Si, Ti, Al, Cr, V, Mg, Zr and W, and the most commonly used liquids and lubricants as sensor material include a) water and aqueous lubricants, b) bio lubricants such as canola oil, castor oil, palm oil, sunflower seed oil, tall oil and whale oil, c) solid lubricants such as polytetrafluoroethylene and graphite, d) synthetic oils such as polyalpha-olefin, synthetic esters, polyalkylene glycols, phosphate esters, alkylated naphthalenes, silicate esters, ionic fluids and multiply alkylated cyclopentanes as well as e) mineral oils, and the most commonly used two-dimensional materials as sensor material include graphene and boron nitride.

The sensor casing is made out of different materials such as polymers, metal alloys, ceramics, composite materials, liquids and viscous compounds where the internal components of a corrosion monitoring sensor can be in a solid casing but alternatively also surrounded by a viscous or jelly-like substance that serves the purpose of the casing, where the most commonly used metals as sensor casing include iron, aluminium, copper, tungsten, zinc, magnesium, titanium, nickel, silver, gold, platinum and their alloys, and the most commonly used polymers as sensor casing include organic polymers such as polyethylene, polypropylene, polyvinyl chloride, plystyrene, nylon, Teflon@ and thermoplastic polyurethanes as well as inorganic polymers such as polysiloxanes and polyphosphazenes, and the most commonly used ceramics as sensor casing include crystalline and non-crystalline, glass like materials, that can be oxides, nitrides or carbides with Si, Ti, Al, Cr, V, Mg, Zr and W, and the most commonly used liquids and lubricants as sensor casing include a) water and aqueous lubricants, b) bio lubricants such as canola oil, castor oil, palm oil, sunflower seed oil, tall oil and whale oil, c) solid lubricants such as polytetrafluoroethylene and graphite, d) synthetic oils such as polyalpha-olefin, synthetic esters, polyalkylene glycols, phosphate esters, alkylated naphthalenes, silicate esters, ionic fluids and multiply alkylated cyclopentanes as well as e) mineral oils.

The sensor casing also serves the purpose of the sensor material.

The sensor casing can be transparent in a desired spectral range of electromagnetic radiation such as ultraviolet, infrared, visible, X-rays, gamma rays, microwaves, radio waves.

The sensor element is a structure that has well-predetermined properties, which change upon coming into contact with the external corrosive application environment, where the well-defined properties of the sensor element include electrical conductivity, electrical resistance, mass, vibration frequency, absorption of electromagnetic radiation in a desired spectral range, color, reflectance in a desired spectral range, pressure and mechanical properties. The sensor element consists of at least two electrodes that are separated by a gap or a connector. The sensor element is based on the change of mechanical properties of its internal components such as springs and cogwheels. The gap in the sensor element is in vacuum or filled with liquid, gas or plasma at a desired pressure. The connector in the sensor element is a) a sacrificial material b) an environment-sensitive material, c) a porous structure, d) an ion conductive material or e) a more sophisticated structure consisting of one or more materials. The connector in the sensor element is in the form of a sheet, layer, a thin 1 - 10000 nm film applied by physical sputtering or chemical deposition techniques, rod, wire, tube or block that has well-defined electrical resistance and conductivity.

The connector in the sensor element is a layer of graphene, graphene oxide, silver or any material that is sensitive to atomic oxygen. The connector in the sensor element is an environment-sensitive material, which interacts with compounds from the application environment by forming physical or chemical bonds. The connector in the sensor element is a material or structure including graphene and graphene-related materials that is sensitive to moisture, where the electrical properties of such a sensor element depend directly on the moisture level in the application environment, which comes into contact with the sensor element if the sensor material has corroded. The connector in the sensor element is sensitive to electromagnetic radiation in a desired spectral range, that can be from 10⁻¹⁰ eV to 10¹⁰ eV (photon energy). In most practical applications the spectral range is limited to soft X-ray, UV, visible and infrared radiation.

The connector in the sensor element is a three-dimensional porous material with a large surface area.

The corrosion sensor is powered from a) a nearby power source that is directly connected to the sensor, b) an external power source via cables, c) an external power source via wireless power transfer or d) an internal or external battery. The measurement device powers the corrosion sensor wirelessly via induction or through wires that connect the sensor and the measurement device. The corrosion sensor is powered with solar cells, dynamos, fuel cells, nuclear fission, nuclear fusion or thermoelectric generators or with thermoelectric generators through temperature gradients or with fuel cells that receive some or all of the fuel from the application environment and/or the surrounding external environment.

The corrosion sensor is powered with a dynamo, which is connected to a rotor inside the application environment such as a pipe, where rotor is moved by the flow of gas or liquid or an external environment, where wind or water cause the rotor to move). The corrosion sensor is powered wirelessly via induction from a measurement device that can be plugged or integrated during manufacturing into a smartphone or a power bank.

The corrosion sensor includes other sensors to monitor the environment such as moisture sensors, light sensors, gas sensors for CO, O₃, H₂S etc. The corrosion sensor transmits information about the progression of corrosion that is provided by the sensor element (possibly through an additional signal transmission/conversion system) in the form of a) an electromagnetic signal (voltage or current) via a conductive cable or optical fibers, b) electromagnetic radiation c) sound, or d) power transfer via induction. The corrosion sensor is used for external surfaces such as roofs, bridges, oil platforms, ship hulls, where the corrosion sensor is equipped with a GPS tracker in order to monitor the condition of the sensor element over long distances. The corrosion sensor is powered wirelessly via induction from an external device and provides information about the progression of corrosion for the user via sound or light.

The corrosion sensor is powered directly by battery, solar cells, cable, dynamo, thermoelectric generators or other means and is equipped with an induction based wireless power transmission system, which transfers power to an external measurement device, which is equipped with a necessary power receiver (coil) and a signal transmission system (LED diode, speaker).

A corrosion sensor according to present invention for pipes and containers in oil, gas, water and ventilation industry, which consists of a transparent casing (e.g. glass, borosilicate, polymers etc.), sensor material and a compound between them, which acts as a binder and/or changes its colour upon contact with the application environment (e.g. blue dry Cobalt Chloride turns pink upon contact with water) when the sensor material is breached due to its corrosion. The sensor can be in the form of a sandwich structure, that can be placed onto pipes or containers. The sensor can also be in the form of a pipe or container. In both cases the sensor material is exposed to the corrosive application environment while the transparent casing is faced outwards for visual observation. Such a system is a cost efficient solution for monitoring the internal condition of inaccessible systems such as pipes and containers before they start to leak.

A corrosion sensor according to present invention for pipes and containers in oil, gas, water and ventilation industry, which is uses a sensor element that is based on the change of its mechanical properties upon contact with the application environment. In such a corrosion sensor, the sensor element is essentially a spring, which is connected to support mechanisms (e.g. cogwheels) and an external system to detect changes in mechanical properties. In the simplest version of such a corrosion sensor, a spring (the sensor element) is connected to an external button. Once the sensor material has been penetrated by the corrosive application environment, the spring corrodes and the mechanical button stops working. Alternatively, a clock-like structure can be used as a sensor element to wind up a spring. The release of the springs mechanical energy and winding up is done with an external mechanism.

A corrosion sensor according to present invention for satellites, which is used to monitor the corrosion of materials and coatings in space and is connected to the main computer of the satellite. Such a sensor includes a connector in the sensor element (e.g. graphene related materials, thin metal films etc.), which is sensitive to the corrosive environment in space (e.g. atomic oxygen at low Earth orbit (LEO) or sulphuric acid at higher altitudes around Venus). The sensor element is covered with the sensor material for monitoring its corrosion in the application environment. The sensor material can be in the form of a thin sheet or a coating, depending on the manufacturing method. Once the sensor material is penetrated due to corrosion, the sensor element comes into contact with the corrosive medium in space, which destroys the connector and through that disrupts the electrical circuit. For instance, a single layer graphene would be oxidized and turned into gas phase CO in a matter of seconds or hours when directly exposed to atomic oxygen at low Earth orbit (calculated based on graphite erosion rates at LEO). Alternatively, the corrosion of the sensor material can be monitored by measuring its electrical properties as the electrical resistance should increase over time if the material is gradually oxidized, etched or eroded. By knowing the thickness of the sensor material and exposure time in space until loss of electrical contact, it is then possible to calculate the rate of corrosion. Such sensors can be scaled down to small sizes (tens of millimetres) and used to monitor the corrosion of many materials even on small cube satellites or testing platforms on the International Space Station.

A corrosion sensor according to present invention for vehicles (cars, drones, planes, ships), which is integrated onto most rapidly corroding critical components, that are impossible or difficult to access (e.g. exhaust pipe). In these applications, the sensor material is exposed to the external corrosive environment (water, moisture, chlorine, UV light, physical erosion by stones and dust etc.). Once the sensor material is penetrated, the corrosive environment comes into contact with the sensor element and changes its properties, which is measured and monitored with a central processing unit (e.g. on-board computer) or an external system (e.g. induction based system that transfers power to sensor to trigger a signal or an ohmmeter to measure the electrical properties of the sensor element). The described corrosion monitoring system can be placed in critical components of vehicles to monitor their condition and alert the user when it is time for maintenance.

A corrosion sensor according to present invention for fusion reactors, in which the sensor element is integrated into divertors and other rapidly deteriorating fusion reactor components for monitoring their condition. In this application, the sensor element is placed behind a layer of divertor material (e.g. tungsten), which has a desired thickness. Once the divertor material is sufficiently damaged by the high energy plasma, the sensor element comes into contact with the energetic particles, which cause its properties to change (e.g. due to the disruption of electrical circuit due to damage to the connector in the sensor element). The condition of the sensor element is monitored through measuring its electrical resistance via cables with an external central processing unit. Such divertors with integrated corrosion sensors can be placed in strategic sites in the fusion reactor to monitor the overall condition of the fusion reactor to predict when the plasma might become unstable due to deterioration of the inner components of the reactor.

A corrosion sensor according to present invention for rocket nozzles, in which the sensor element is integrated into nozzles. In such a setup, the inner wall of the nozzle acts as the sensor material, which covers the sensor element. Once the wall of the nozzle starts deteriorating due to high temperatures and corrosive fuel components or combustion products, the connector in the sensor element is damaged, which disrupts the electrical circuit. The condition of the sensor element can be monitored with a central processing unit via cables or with an external system that powers the sensor via induction or measures the electrical properties of the sensor element directly with an ohmmeter. Such a corrosion monitoring system for nozzles can be applied on reusable rockets as those developed by SpaceX in order to monitor the condition of nozzles prior to launch or re-entry to prevent disasters.

A corrosion sensor according to present invention for pipes, containers (oil, gas, water, ventilation systems) and external surfaces (e.g. roofs, bridges, oil platforms, ship hulls), where the corrosion sensor is equipped with a GPS tracker. In such a system, the GPS tracker is powered through the sensor element, which uses a conductive connector. Once the sensor material has been penetrated due to corrosion, the application environment also destroys the connector and the electrical circuit is broken. As a result, the GPS tracker is no longer powered. In such a corrosion monitoring system the failure of the GPS tracker signals the need for maintenance as a pre-determined layer of sensor material has corroded. Such a system can be used to monitor corrosion over vast distances, having the data displayed and processed on central computers and smartphones. For instance, a long oil pipe can be equipped with such sensors and the condition of each sensor displayed on a map, which signals immediately where the pipe starts to fail due to corrosion. Alternatively, such sensors can be placed in water pipes and ventilation systems to monitor their corrosion in cities in real time and alert both the user as well as service providers when it is time for maintenance.

## Claims

1. A corrosion monitoring system comprising a) a corrosion sensor and b) a measurement device, where the sensor consists of a) a sensor material, b) sensor casing, c) sensor element, d) separator, e) power management system and f) data processing and transmission system, where the sensor material has predetermined properties such as size, thickness, shape, rate and type of corrosion in a given environment, electrical resistance / conductivity, reflectivity / transparence at a given wavelength range of electromagnetic radiation, hardness.

2. The corrosion monitoring system according to claim 1, where the sensor material is in the form of a flat or arbitrarily shaped plate or sheet, thin films applied via physical sputtering and chemical deposition techniques, a coating such as a paint, wire, tube or a sophisticated assembly or structure that mimics the monitored structure, where the sensor material can be a) a plate with welding or bolts in it, or b) a 2 dimensional or 3 dimensional structure with an electrical resistance that is suitable for measurements with compact less-sensitive ohmmeters, or c) a 3 dimensional shape with cavities, protrusions and appropriate roughness in order to mimic the monitored structure material, or d) a multi layered structure such as a metal with a paint coating, where the lower practical thickness limit for the sensor material can be as low as 1 nm, especially in the case of thin films, and the practical upper thickness limit for the sensor material in most applications is 5 m.

3. The corrosion monitoring system according to claims 1 and 2, where the sensor material is a metal, polymer, ceramic, liquid such as a viscous lubricant, two-dimensional material or a composite containing the previously afore-mentioned, where the most commonly used metals as sensor material include iron, aluminium, copper, tungsten, zinc, magnesium, titanium, nickel, silver, gold, platinum and their alloys, and the most commonly used polymers as sensor material include organic polymers such as polyethylene, polypropylene, polyvinyl chloride, plystyrene, nylon, Teflon@ and thermoplastic polyurethanes as well as inorganic polymers such as polysiloxanes and polyphosphazenes, and the most commonly used ceramics as sensor material include crystalline and non-crystalline, glass like materials, that can be oxides, nitrides or carbides with Si, Ti, Al, Cr, V, Mg, Zr and W, and the most commonly used liquids and lubricants as sensor material include a) water and aqueous lubricants, b) bio lubricants such as canola oil, castor oil, palm oil, sunflower seed oil, tall oil and whale oil, c) solid lubricants such as polytetrafluoroethylene and graphite, d) synthetic oils such as polyalpha-olefin, synthetic esters, polyalkylene glycols, phosphate esters, alkylated naphthalenes, silicate esters, ionic fluids and multiply alkylated cyclopentanes as well as e) mineral oils, and the most commonly used two-dimensional materials as sensor material include graphene and boron nitride.

4. The corrosion monitoring system according to claims 1, where the sensor casing is designed to be compatible with the monitored structure being mounted onto valve ports on oil or water pipes and is partially or completely exposed to the corrosive environment.

5. The corrosion monitoring system according to claims 1 and 4, where the sensor casing is made out of different materials such as polymers, metal alloys, ceramics, composite materials, liquids and viscous compounds where the internal components of a corrosion monitoring sensor can be in a solid casing but alternatively also surrounded by a viscous or jelly-like substance that serves the purpose of the casing, where the most commonly used metals as sensor casing include iron, aluminium, copper, tungsten, zinc, magnesium, titanium, nickel, silver, gold, platinum and their alloys, and the most commonly used polymers as sensor casing include organic polymers such as polyethylene, polypropylene, polyvinyl chloride, plystyrene, nylon, Teflon@ and thermoplastic polyurethanes as well as inorganic polymers such as polysiloxanes and polyphosphazenes, and the most commonly used ceramics as sensor casing include crystalline and non-crystalline, glass like materials, that can be oxides, nitrides or carbides with Si, Ti, Al, Cr, V, Mg, Zr and W, and the most commonly used liquids and lubricants as sensor casing include a) water and aqueous lubricants, b) bio lubricants such as canola oil, castor oil, palm oil, sunflower seed oil, tall oil and whale oil, c) solid lubricants such as polytetrafluoroethylene and graphite, d) synthetic oils such as polyalpha-olefin, synthetic esters, polyalkylene glycols, phosphate esters, alkylated naphthalenes, silicate esters, ionic fluids and multiply alkylated cyclopentanes as well as e) mineral oils.

6. The corrosion monitoring system according to claims 1, where the sensor casing also serves the purpose of the sensor material.

7. The corrosion monitoring system according to claims 5, where the sensor casing is transparent in a desired spectral range of electromagnetic radiation such as ultraviolet, infrared, visible, X-rays, gamma rays, microwaves, radio waves.

8. The corrosion monitoring system according to claims 1, where the sensor element is a structure that has well-predetermined properties, which change upon coming into contact with the external corrosive application environment, where the well-defined properties of the sensor element include electrical conductivity, electrical resistance, mass, vibration frequency, absorption of electromagnetic radiation in a desired spectral range, color, reflectance in a desired spectral range, pressure and mechanical properties.

9. The corrosion monitoring system according to claims 1, where the sensor element consists of at least two electrodes that are separated by a gap or a connector.

10. The corrosion monitoring system according to claims 8 or 9, where the sensor element is based on the change of mechanical properties of its internal components such as springs and cogwheels.

11. The corrosion monitoring system according to claims 9, where the gap in the sensor element is in vacuum or filled with liquid, gas or plasma at a desired pressure.

12. The corrosion monitoring system according to claims 9, where the connector in the sensor element is a) a sacrificial material b) an environment-sensitive material, c) a porous structure, d) an ion conductive material or e) a more sophisticated structure consisting of one or more materials.

13. The corrosion monitoring system according to claims 12, where the connector in the sensor element is in the form of a sheet, layer, a thin 1 - 10000 nm film applied by physical sputtering or chemical deposition techniques, rod, wire, tube or block that has well-defined electrical resistance and conductivity.

14. The corrosion monitoring system for using in space according to claims 13, where the connector in the sensor element is a layer of graphene, graphene oxide, silver or any material that is sensitive to atomic oxygen.

15. The corrosion monitoring system according to claims 9 and 12, where the connector in the sensor element is an environment-sensitive material, which interacts with compounds from the application environment by forming physical or chemical bonds.

16. The corrosion monitoring system according to claims 9 and 12, where the connector in the sensor element is a material or structure including graphene and graphene-related materials that is sensitive to moisture, where the electrical properties of such a sensor element depend directly on the moisture level in the application environment, which comes into contact with the sensor element if the sensor material has corroded.

17. The corrosion monitoring system according to claims 9 and 12, where the connector in the sensor element is sensitive to electromagnetic radiation in a desired spectral range, that can be from 10⁻¹⁰ eV to 10¹⁰ eV (photon energy). In most practical applications the spectral range is limited to soft X-ray, UV, visible and infrared radiation.

18. The corrosion monitoring system according to claims 10 and 12, where the connector in the sensor element is a three-dimensional porous material with a large surface area.

19. The corrosion monitoring system according to claims 18, where the exposure of porous connector material to the application environment in the case of sensor material corrosion causes the electrical resistance and/or electrical capacitance of the sensor element to change.

20. The corrosion monitoring system according to claims 9 and 12, where the connector in the sensor element is made out of an ion conductive material including polypyrrole, polyaniline.

21. The corrosion monitoring system according to claims 9 and 12, where the connector in the sensor element is an assembly of materials that have a different electrochemical activity and lead to accelerated localized galvanic corrosion upon contact with corrosive application environment.

22. The corrosion monitoring system according to claims 1, where the separator is a gap, a porous material or a layer of sacrificial material. Practical examples of porous materials used as separators include paper, woven and nonwoven materials made from fibers such as synthetic and organic cloth as well as woven glass. The sacrificial material used as a separator can be a water soluble compound such as a water soluble plastic or an inorganic salt.

23. The corrosion monitoring system according to claims 1, where the corrosion sensor is powered from a) a nearby power source that is directly connected to the sensor, b) an external power source via cables, c) an external power source via wireless power transfer or d) an internal or external battery.

24. The corrosion monitoring system according to claims 23, where the measurement device powers the corrosion sensor wirelessly via induction or through wires that connect the sensor and the measurement device.

25. The corrosion monitoring system according to claims 23, where the corrosion sensor is powered with solar cells, dynamos, fuel cells, nuclear fission, nuclear fusion or thermoelectric generators or with thermoelectric generators through temperature gradients or with fuel cells that receive some or all of the fuel from the application environment and/or the surrounding external environment.

26. The corrosion monitoring system according to claims 25, where the corrosion sensor is powered with a dynamo, which is connected to a rotor inside the application environment such as a pipe, where rotor is moved by the flow of gas or liquid or an external environment, where wind or water cause the rotor to move).

27. The corrosion monitoring system according to claims 24, where the corrosion sensor is powered wirelessly via induction from a measurement device that can be plugged or integrated during manufacturing into a smartphone or a power bank.

28. The corrosion monitoring system according to claims 1, where the corrosion sensor includes other sensors to monitor the environment such as moisture sensors, light sensors, gas sensors for CO, O₃, H₂S etc.

29. The corrosion monitoring system according to claims 1, where the corrosion sensor transmits information about the progression of corrosion that is provided by the sensor element (possibly through an additional signal transmission/conversion system) in the form of a) an electromagnetic signal (voltage or current) via a conductive cable or optical fibers, b) electromagnetic radiation c) sound, or d) power transfer via induction.

30. The corrosion monitoring system according to claim 1, where the corrosion sensor is used for external surfaces such as roofs, bridges, oil platforms, ship hulls, where the corrosion sensor is equipped with a GPS tracker in order to monitor the condition of the sensor element over long distances.

31. The corrosion monitoring system according to claims 1, where the corrosion sensor is powered wirelessly via induction from an external device and provides information about the progression of corrosion for the user via sound or light.

32. The corrosion monitoring system according to claims 1, where the corrosion sensor is powered directly by battery, solar cells, cable, dynamo, thermoelectric generators or other means and is equipped with an induction based wireless power transmission system, which transfers power to an external measurement device, which is equipped with a necessary power receiver (coil) and a signal transmission system (LED diode, speaker).

33. A method for monitoring corrosion by using a corrosion monitoring system according to claims 1 to 33, where the corrosion of the structure material such as pipe is monitored by measuring the change of the sensor element and/or the sensor material properties including an electrical conductivity, an electrical resistance, pH (as in acidity or alkalinity), state of matter (if phase transition is triggered), temperature, a transmittance of electromagnetic radiation in the range of 10⁻¹⁰ eV to 10¹⁰ eV (photon energy) and/or a reflectivity of electromagnetic radiation in the range of 10⁻¹⁰ eV to 10¹⁰ eV.
